# EUROPÄISCHE PATENTSCHRIFT

(11) **EP 1 074 434 B1**
(45) Veröffentlichungstag und Bekanntmachung des Hinweises auf die Patenterteilung: **20.04.2005**
(21) Anmeldenummer: 00116166.0
(22) Anmeldetag: 01.08.2000
(51) Int. Cl.: B60R 21/20

(54) **Abdeckung für einen Gassack eines Fahrzeuginsassen-Rückhaltesystems**
Airbag cover for a vehicle passenger restraint system
Couvercle pour le coussin gonflable d'un dispositif de retenue de passager d'un véhicule

(30) Priorität: 06.08.1999 DE 29913741 U
(43) Veröffentlichungstag der Anmeldung: 07.02.2001
(73) Patentinhaber: TRW Automotive Safety Systems GmbH, 63743 Aschaffenburg (DE)
(72) Erfinder: Derrick, John-Oliver, 97265 Hettstadt (DE)
(74) Vertreter: Sties, Jochen

(56) Entgegenhaltungen:
- EP-A- 0 904 994
- EP-A- 0 968 888
- DE-A- 19 749 914
- DE-C- 19 617 758

## Beschreibung

Die Erfindung betrifft eine Abdeckung für einen Gassack eines Fahrzeuginsassen-Rückhaltesystems, gemäß dem Oberbegriff des Anspruchs 1.

Nach Aktivierung eines Gasgenerators, der ein Druckgas bereitstellt, wird der Gassack mit Druck beaufschlagt, so daß er gegen die Abdeckung drückt. Diese reißt dann entlang der Reißlinie auf, um dem Gassack zu ermöglichen, sich vollständig im Innenraum des Fahrzeugs zu entfalten und eine Rückhaltewirkung für einen Fahrzeuginsassen bereitzustellen.

Die DE-A-196 17 758 beschreibt eine Abdeckung der eingangs genannten Art, bei der die Reißlinien auf einen Punkt ausgerichtet sind und an einer Aussparung enden, in die eine Metallkappe eingesetzt ist.

In der DE-A-197 49 914 ist eine ähnliche Abdeckung beschrieben, bei der die Reißlinien an einer zentralen Öffnung enden, durch welche ein Metallteil der Abdeckung am Lenkrad befestigt ist.

Das Austreten des Gassacks aus einer für ihn vorgesehenen Aufnahme, nachdem die Abdeckung geöffnet ist, wird entscheidend von der Art und Weise beeinflußt, wie die Abdeckung öffnet. Dies wiederum hängt von der Reißlinie oder den Reißlinien ab, die vorgesehen sind. Vorzugsweise ermöglichen die Reißlinien ein gleichmäßiges Öffnen der Abdeckung, ohne dem Öffnungsvorgang einen allzu großen Widerstand entgegenzusetzen, während gleichzeitig eine ausreichende Festigkeit gewährleistet ist, damit die Abdeckung beim Normalbetrieb des Fahrzeugs nicht beschädigt wird.

Die Erfindung schafft eine Abdeckung für einen Gassack, welche diese beiden Anforderungen erfüllt. Die erfindungsgemäße Abdeckung ist durch die Merkmale des Anspruchs 1 gekennzeichnet. Bei dieser Ausgestaltung wird der Vorgang des Aufreißens entlang der kreisförmigen Reißlinie eingeleitet; er setzt sich dann entlang der geradlinigen, auf einen Punkt hin ausgerichteten Reißlinien fort. Diese Gestaltung ermöglicht es, innerhalb der kreisförmigen Reißlinie eine Aufnahmefläche beispielsweise für ein Markenemblern zu schaffen.

Wenn ein Markenemblem verwendet wird, kann an der von der kreisförmigen Reißlinie gebildeten Aufnahmefläche eine Verstärkung angebracht sein. Diese gewährleistet, daß die Aufnahmefläche mit dem Markenemblem, wenn die Abdeckung aufgerissen wird, sich nicht von der Abdeckung löst, sondern zuverlässig mit ihr verbunden bleibt. Die Verstärkung kann beispielsweise eine in die Abdeckung eingelegte Blechlasche sein.

Gemäß einer alternativen Ausführungsform ist vorgesehen, daß die kreisförmige Reißlinie in sich geschlossen ist und die Aufnahmefläche mit einem Fangband verbunden ist. Bei dieser Ausgestaltung ist die Aufnahmefläche, nachdem die kreisförmige Reißlinie den Vorgang des Aufreißens ausgelöst hat, vollständig von der Abdeckung gelöst; um zu verhindern, daß sie von dem sich entfaltenden Gassack in den Fahrzeuginnenraum geschleudert wird, ist das Fangband vorgesehen, welches gewährleistet, daß sich die Aufnahmefläche zusammen mit dem Markenemblem auf einer kontrollierten Bahn bewegt.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Figur 1 in einer schematischen Draufsicht eine Abdeckung gemäß einer ersten Ausführungsform, die nicht Teil der Erfindung ist;
- Figur 2 in einer schematischen Draufsicht eine Abdeckung gemäß einer zweiten, erfindungsgemäßen Ausführungsform; und
- Figur 3 in einer schematischen Draufsicht eine Abdeckung gemäß einer dritten, erfindungsgemäßen Ausführungsform.

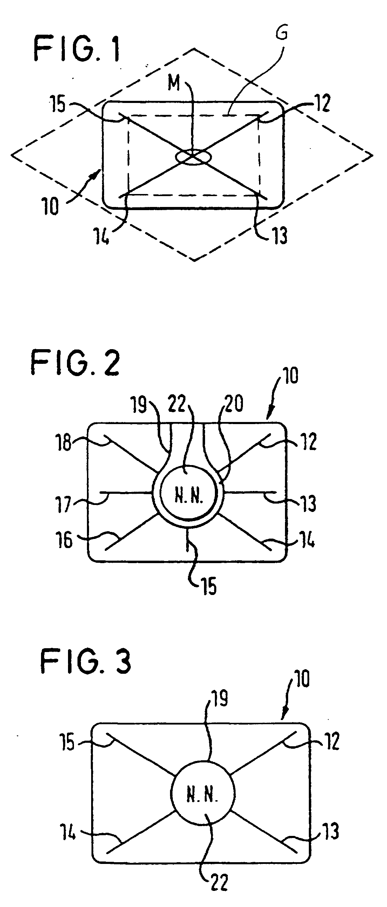

Die in Figur 1 gezeigte Ausführungsform fällt nicht unter Anspruch 1, sondern dient lediglich zum besseren Verständnis.

In Figur 1 ist eine Abdeckung 10 gezeigt, die dazu dient, einen im Ruhezustand gefalteten Gassack eines Fahrzeuginsassen-Rückhaltesystems gegenüber dem Fahrzeuginnenraum abzuschließen. Die Abdeckung 10, von der in Figur 1 die dem Fahrzeuginnenraum zugewandte Seite zu sehen ist, weist vier Reißlinien 12, 13, 14, 15 auf, die beispielsweise durch eine Materialschwächung vordefiniert sind. Die Reißlinien sind im Ausgangszustand nicht durchgehend, d.h von außen nicht sichtbar, so daß vom Fahrzeuginnenraum aus betrachtet die Abdeckung eine durchgehende, geschlossene Oberfläche aufweist. Ein sich hinter der Abdeckung10 befindender Gassack G ist in Figur 1 mit einer Strichlinie angedeutet.

Die Reißlinien 12, 13, 14, 15 sind alle auf einen Punkt hin ausgerichtet, nämlich einen Mittelpunkt M, der etwa in der Mitte der Oberfläche der Abdeckung 10 liegt. Die Reißlinien sind somit sternförmig ausgerichtet.

Wenn der gefaltete Gassack von innen gegen die Abdeckung drückt, beginnt der Vorgang des Öffnens der Abdeckung dadurch, daß die vordefinierten Reißlinien im Bereich des Mittelpunktes M aufzureißen beginnen. Dieses Aufreißen setzt sich dann sternförmig nach außen fort, so daß die zwischen den Reißlinien 12, 13, 14, 15 gebildeten Abdeckungsteile nach außen klappen können. Die nach außen geklappten Abdeckungsteile sind in Figur 1 gestrichelt angedeutet.

In Figur 2 ist eine Abdeckung gezeigt, bei der sieben sternförmig angeordnete Reißlinien 12 bis 18 vorgesehen sind. Diese Reißlinien sind ebenfalls sternförmig angeordnet, treffen sich jedoch nicht in einem Mittelpunkt, sondern enden in einer zusätzlichen Reißlinie 19. Diese Reißlinie 19 verläuft ausgehend vom Außenrand der Abdeckung zur Mitte hin und erstreckt sich in der Mitte der Abdeckung kreisförmig, so daß eine Aufnahmefläche 20 für ein Markenemblem 22 gebildet ist.

Der Aufreißvorgang beginnt hier entlang des kreisförmigen Abschnittes der Reißlinie 19 und setzt sich dann sternförmig nach außen fort, so daß der Gassack durch die Abdeckung hindurch sich entfalten kann. Die Aufnahmefläche 20 zusammen mit dem daran angebrachten Markenemblem 22 klappt dabei vergleichbar mit einem anderen Abdeckungsteil nach außen. Um zuverlässig zu verhindern, daß sich das Markenemblem 22 nicht von dem entsprechenden Abdeckungsteil löst, kann ein Verstärkungsteil beispielsweise aus Blech in den Abdeckungsteil eingeschäumt werden, der von der Reißlinie 19 abgegrenzt ist.

In Figur 3 ist eine weitere Ausführungsform gezeigt, bei der die zusätzlich zu den zur Mitte der Abdeckung hin ausgerichteten, geradlinigen Reißlinien 12, 13, 14, 15 vorgesehene kreisförmige Reißlinie 19 in sich geschlossen ist. Es wird somit ein mittig angeordneter Abdeckungsteil definiert, an dem das Markenemblem 22 angebracht ist. Auf der Unterseite der Abdeckung ist im Bereich der Aufnahmefläche für das Markenemblem 22 ein Fangband angebracht, das beispielsweise mit dem Gehäuse des unter der Abdeckung liegenden Gassackmoduls fest verbunden ist. Das Fangband verhindert, daß das Markenemblem und der zugehörige Abdeckungsteil, nachdem der Aufreißvorgang entlang der Reißlinie 19 eingeleitet wurde und sich dann sternförmig nach außen entlang der Reißlinien 12 - 15 fortsetzt, unkontrolliert in den Fahrzeuginnenraum geschleudert werden.

## Patentansprüche

1. Abdeckung (10) für einen Gassack eines Fahrzeuginsassen-Rückhaltesystems, die mit mehreren Reißlinien (12 - 18) versehen ist, die alle auf einen Punkt hin ausgerichtet sind, wobei die Reißlinien (12 - 18) am Umfang einer zusätzlichen Reißlinie (19) enden, die kreisförmig ist und etwa in der Mitte der Abdeckung angeordnet ist, und **dadurch gekennzeichnet, daß** die Reißlinien im Ausgangszustand nicht durchgehend sind, so daß vom Fahrzeuginnenraum aus betrachtet die Abdeckung eine durchgehende, geschlossene Oberfläche aufweist.

2. Abdeckung nach Anspruch 1, **dadurch gekennzeichnet, daß** die kreisförmige Reißlinie (19) eine Aufnahmefläche (20) für ein Markenemblem (22) umschließt.

3. Abdeckung nach Anspruch 2, **dadurch gekennzeichnet, daß** an der Aufnahmefläche (20) eine Verstärkung angebracht ist.

4. Abdeckung nach Anspruch 3, **dadurch gekennzeichnet, daß** die Verstärkung eine in die Abdeckung eingelegte Blechlasche ist.

5. Abdeckung nach Anspruch 2, **dadurch gekennzeichnet, daß** die kreisförmige Reißlinie (19) in sich geschlossen ist und die Aufnahmefläche mit einem Fangband verbunden ist.

6. Abdeckung nach einem der vorhergehenden Ansprüche, **dadurch gekennzeichnet, daß** die auf einen Punkt hin ausgerichteten Reißlinien (12 - 18) geradlinig verlaufen.

## Claims

1. A covering (10) for a gas bag of a vehicle occupant restraint system, which is provided with a plurality of tear lines (12 - 18) which are all oriented towards one point, the tear lines (12 - 18) terminating at the periphery of an additional tear line (19) which is circular and disposed approximately in the center of the covering, and **characterized in that** in the initial condition, the tear lines do not go through so that, as viewed from the vehicle interior, the covering has a continuous, closed surface.

2. The covering according to claim 1, **characterized in that** the circular tear line (19) encloses a receiving surface (20) for a brand emblem (22).

3. The covering according to claim 2, **characterized in that** a reinforcement is attached to the receiving surface (20).

4. The covering according to claim 3, **characterized in that** the reinforcement is a sheet metal tab inserted in the covering.

5. The covering according to claim 2, **characterized in that** the circular tear line (19) is closed in itself and that the receiving surface is connected with a tether.

6. The covering according to any of the preceding claims, **characterized in that** the tear lines (12 - 18) which are oriented towards one point extend rectilinearly.

## Revendications

1. Couvercle (10) pour un coussin à gaz d'un système de retenue de passager de véhicule, qui est pourvu de plusieurs lignes de déchirement (12 - 18) qui sont toutes orientées sur un point, les lignes de déchirement (12 - 18) se terminant à la périphérie d'une ligne de déchirement (19) additionnelle qui est de forme circulaire et qui est agencée approximativement au milieu du couvercle, **caractérisé en ce que** les lignes de déchirement ne sont pas traversant à l'état initial, de sorte que vu depuis l'habitacle du véhicule, le couvercle présente une surface fermée continue.

2. Couvercle selon la revendication 1, **caractérisé en ce que** la ligne de déchirement (19) de forme circulaire entoure une surface de réception (20) pour un emblème de marque (22).

3. Couvercle selon la revendication 32, **caractérisé en ce que** sur la surface de réception (20) est monté un renforcement.

4. Couvercle selon la revendication 3, **caractérisé en ce que** le renforcement est une patte de tôle insérée dans le couvercle.

5. Couvercle selon la revendication 2, **caractérisé en ce que** la ligne de déchirement (19) de forme circulaire est fermée sur elle-même et la surface de réception est reliée à une bande de garde.

6. Couvercle selon l'une des revendications précédentes, **caractérisé en ce que** les lignes de déchirement (12 - 18) orientées sur un point s'étendent rectilignes.
